# EUROPEAN PATENT SPECIFICATION

(11) **EP 3 550 963 B1**
(45) Date of publication and mention of the grant of the patent: **13.11.2024**
(21) Application number: 17877958.3
(22) Date of filing: 06.12.2017
(51) Int. Cl.: A01K 61/00, A01K 63/00

(54) **FISH FARMING PLANT WITH FISH EXTRACTION**
FISCHZUCHTANLAGE MIT FISCHEXTRAKTION
INSTALLATION DE PISCICULTURE AVEC EXTRACTION DE POISSONS

(30) Priority: 06.12.2016 DK PA201670967
(43) Date of publication of application: 16.10.2019
(73) Proprietor: Assentoft Holding PDN ApS, 8960 Randers SØ (DK)
(72) Inventor: BÆKGAARD, Arne, 7755 Bedsted Thy (DK); BROCKDORFF, Dan, 8752 Østbirk (DK); OLSEN, Flemming, 8930 Randers NØ (DK); DAMGAARD NIELSEN, Peter, 8000 Aarhus C (DK)
(74) Representative: Nex & Phister Law & IP Aps
(86) International application number: PCT/DK2017/050413
(87) International publication number: WO 2018/103807

(56) References cited:
- WO-A1-2009/100503
- WO-A1-2012/064201
- WO-A1-2013/029100
- WO-A1-2015/099540
- DE-A1- 2 829 496
- DK-A1- 201 470 781
- GB-A- 2 016 882
- NO-B- 178 811
- US-A- 4 003 337
- No further relevant documents disclosed

## Description

### Field of invention

This disclosure relates to a fish farming plant with a central tank that is at least partially surrounded by one or more fish tanks where at least one of the one or more fish tanks has an inner wall with an inner wall face and an outer wall with an outer wall face, said fish tank having a fish tank width as the distance between the inner wall face and the outer wall face along the extent (azimuth, arc) of the at least one fish tank; the fish farming plant further comprising at least one divider wall with a divider wall width between an inner end and an outer end of the divider wall and configured to span between the inner wall face and the outer wall face; wherein the divider wall width is larger than the fish tank width.

### Background of the invention

Handling fish at different stages during growth in a controlled or industrial production setting is an important part of aquaculture industry.

Prior to this disclosure, fish farming plants having a central tank are disclosed in the patent literature.

For example, DK 2014 70781 A1 discloses an arrangement of circular concentric fish tanks that are subdivided by a removable section wall or divider. The section wall has a fixed width centre part sided by pivotable parts to close against the fish tank walls to prevent fish from escaping from one section to another. The section wall is supported by a rod which is adjustable by means of a telescopic type of arrangement to "automatically" adjust the width.

However in practice numerous problems remain with regard to ensuring separation of fish tank sections due to complexity. Furthermore there is a need to improve how to handle dead fish and/or fish alive, and to provide an alternative solution to existing systems.

Flexibility in size of fish tank and extraction of fish - either dead or alive - are areas that generally need improvements in industrial aquaculture.

It is an objective of the present invention to overcome one or more of the above-mentioned problems and generally to simplify the section walls so as to improve operability in practice and to improve flexibility, whilst at the same time allowing for handling dead fish or fish alive.

US4003337 discloses a method and apparatus to grow aquatic life forms, such as different species of fish or shellfish. The fish farming plant comprises a snail-shaped fish tank during transfer to the next larger tank without physical handling when they have reached their optimum growth for the tank in which they are disposed. The fish farming plant comprises concentrically arranged tanks of an appropriate volume to provide an optimum rate of growth of the fish in each stage of their life. The tanks are arranged in surrounding relationship to each other and are successively larger from the inside out.

### Description

In one aspect of the present disclosure there is provided a fish farming plant according to the features of claim 1, a method of positioning a divider wall according to the features of claim 12 and a method of extracting fish from a tank according to the features of claim 14.

Fish farming plant having a central tank, which is at least partially surrounded by one or more fish tanks. At least one of the one or more fish tanks has an inner wall with an inner wall face and an outer wall with an outer wall face. Said fish tank having a fish tank width as a distance between the inner wall face and the outer wall face along the extent (azimuth, arc) of the at least one fish tank.

The central tank may be configured with a water treatment plant according to the particular needs. The water treatment plant may be a bio filter type of plant. A person skilled in the art will appreciate the need to provide the necessary conduits, pipes, connections, flow applicators and flows to make a fish farming plant according to particular types of fish.

The fish farming plant may further comprise at least one divider wall with a divider wall width between an inner end and an outer end of the divider wall. The divider wall is configured to span between the inner wall face and the outer wall face; wherein the divider wall width is larger than the fish tank width.

It is understood that the width of the divider wall may be at least 5% larger than the fish tank width.

In another embodiment the divider wall width may be 15% larger than the fish tank width as this will increase the angle between the divider wall and the central tank tangent.

One effect of having a divider wall width larger than the fish tank width is that the fish tank can be built or constructed with a varying width along a path. This will reduce the precision needed when building the fish tank and thus the building cost is reduced.

Normally a person skilled in the art would make a simple or symmetrical construction. However, in practice it has shown to be very hard to construct a fish tank with a constant fish tank width. Or the width may change over time. Here constant should be read as being within an allowable margin of error. If the fish tank has a section where the fish tank width is outside the allowable margin of error, then the divider wall would not be able to move into that section, and thus the fish tank would get divider wall dead zones which will limit the usability.

The above-mentioned problem is removed by making the divider wall width larger than the fish tank width as the fish tank must not have sections where the divider wall is not capable of moving into the previously mentioned section due to non-compatible dimensions.

Another effect of having a divider wall width larger than the fish tank width is that the divider wall will always have an angle relative to the central tank tangent at the interaction between the divider wall and the central tank which always differs from 90 degrees.

The angle will have an impact on the collection of dead fish. The dead fish will be dragged by the current in the fish tank towards the divider wall and due to the angle relative to the central tank tangent, the dead fish will move towards the same area from where the dead fish may easily be collected.

In an aspect of the invention the outer wall has outer wall engagement means for engaging with outer divider engagement means for moving and/or positioning the outer end of the divider wall.

Likewise, the inner wall has inner wall engagement means for engaging with inner divider engagement means for moving and/or positioning the inner end of the divider wall.

By having a moveable divider wall, the fish farming plant can be regulated to have the most optimum conditions for the fish throughout their life cycle.

In an aspect of the invention the divider wall may comprise at least one fish suction arrangement having a suction inlet located at a bottom end of the divider wall. The at least one fish suction arrangement may be arranged towards the inner end, the outer end or both ends of the divider wall.

An embodiment of a fish suction arrangement comprises a suction inlet connected by a channel to a dead fish outlet. The fish suction arrangement further comprises flow means for establishing a flow in the channel between the suction inlet to the dead fish outlet for discharging dead fish.

The fish suction arrangement may be adapted for being mounted on an inner end or outer end of a divider wall.

Dead fish will be dragged by the flow until it reaches a divider wall where it may be forced towards either end of the divider wall depending on the angle of the divider wall with an inner and outer wall of a fish tank. Thus, the fish suction arrangement can efficiently collect the dead fish by being connected to the divider wall.

If the divider wall has a width larger than the fish tank width, then the fish will amass at the end of the divider wall which forms an acute angle with an inner or outer wall of a fish tank.

The fish suction arrangement may work independently of the angle of the divider wall angle with an inner/outer wall of a fish tank.

The suction inlet is positioned at the bottom of a fish tank containing living and dead fish, while the dead fish outlet is positioned outside the fish tank for removal of dead fish.

The suction inlet may comprise a suction inlet gate, which can be opened and closed, thereby controlling the fish suction arrangement.

The suction inlet gate may be controlled by a suction inlet handle.

The suction inlet may be cone-shaped, thereby enabling the fish suction arrangement to collect from a larger area.

The dead fish outlet may be in communication with a dead fish reservoir, which reservoir may be emptied on a regular basis.

The dead fish outlet may be in communication with a conveyor, which can transport the dead fish further away from the fish tank.

The dead fish may be transported to a bioreactor or digester.

The dead fish outlet may comprises means for changing a direction of dead fish outlet. The skilled person would know how to make the means for changing the direction of dead fish outlet.

The effect of a changeable direction of the dead fish outlet is that the direction of the suction inlet and the direction of dead fish outlet are decoupled, which ensures that the divider wall may change angle with an inner and/or outer wall of a fish tank wall. Thereby the dead fish outlet can be in communication with means for removal of dead fish such as a dead fish reservoir or a conveyor, regardless of the direction of the suction inlet and/or angle of the divider wall.

The flow means for establishing a dead fish flow in the channel from the suction inlet to the dead fish outlet for discharging dead fish may be one or more injectors or nozzles injecting air, thereby establishing an airlift and a flow from the suction inlet to the dead fish outlet. This enables the fish suction inlet to collect dead fish as the fish will be sucked towards the fish suction inlet from where they will be forced through the channel and out of the dead fish outlet.

The flow means for establishing a dead fish flow may be established by a pump creating a flow from the fish suction inlet to the dead fish outlet. This enables the fish suction inlet to collect dead fish as the fish will be sucked towards the fish suction inlet from where they will be forced through the channel and out of the dead fish outlet.

As an example, a method of removing dead fish from a fish tank may be by performing one or more acts of:
- An act of creating a flow in the channel from the suction inlet to the dead fish outlet for discharging dead fish;
- An act of sucking from the suction inlet.

The flow will generate the suction in front of the suction inlet.

There may further be an act of collecting dead fish outside the fish tank.

The method may be performed by an at least partly autonomous computer system controlling the fish suction arrangement.

In an aspect of the invention, the one or more divider walls may be able to turn 360 degrees plus around the fish tank.

The flexibility of the fish farming plant is significantly increased by having divider walls capable of moving freely around in the fish tank.

This is especially true when there are more than one divider wall in the fish tank as they may define compartments of any size.

Depending on the angle between the divider wall and the central tank tangent at the interaction between the divider wall and the central tank, the dead fish may be collected by the fish suction arrangement at the inner end or outer end of the divider wall.

It may be advantageous to change the angle, hence in an embodiment a fish suction arrangement may be placed in each end of the divider wall.

In an aspect of the invention the fish extraction arrangement may have an extraction plate configured to span the divider wall width and it may be configured to move from the bottom of the fish tank towards the top.

The upwards movement of the extraction plate will guide the fish to move towards the extraction container. Thus, the fish are removed in an easy manner.

The extractor plate may be guided in a guide and powered or driven by a motor in a drive system.

An embodiment of a fish extraction arrangement for extraction or collection of living fish from a fish tank, the fish extraction arrangement comprises an extraction plate adapted to form an enclosed compartment with at least two divider walls wherein at least one of the divider walls are moveable, the fish extraction arrangement further comprising means for moving the extraction plate.

It is easier to remove fish when the fish density is large, but as fish is removed from the fish tank, the fish density decreases. The decrease in fish density may be counteracted by moving the extraction plate from the bottom of the fish tank to the top, thereby reducing the size of the compartment.

The living fish may be collected from the fish tank manually or by a fish pump or through a gate. The skilled person would know how to collect the fish from the fish tank.

The extraction plate may have any shape as long as the extraction plate is able to form the enclosed compartment with the moveable walls and one or more side walls of a fish tank. Thus, the enclosed compartment may have any shape.

Each moveable wall may be perpendicular to an inner and/or outer wall face of the fish tank.

Each moveable wall may form an angle with a wall face of the fish tank, which angle is less than 90 degrees.

The extraction plate may be attached to a guide, which may be powered by a motor for moving the extraction plate along the guide.

The extraction plate may be connected to a crane system such that the extraction plate may be removed completely from the fish tank for situations when no living fish is to be removed from the fish tank.

The crane system may, when living fish are to be removed from the fish tank, lower the extraction plate to the bottom of the fish tank.

This may be followed by steps of moving the moveable walls next to the fish extraction plate thereby forming the enclosed compartment.

The crane system may afterwards lift the extraction plate thereby making the compartment smaller.

After the fish tank has been emptied, the crane system may lift the extraction plate out of the fish tank.

In an aspect of the invention the fish farming plant further comprises a fish extraction container in communication with the fish extraction arrangement in the fish tank via an extraction gate in the outer or inner wall.

In an embodiment the fish extraction arrangement may further comprise a fish extractions container.

An embodiment of a fish extraction container for extraction of fish from a fish tank, the fish extraction container being positioned on an inner wall or an outer wall of a fish tank and comprising an extraction gate for controlling a communication with a fish tank and a discharge point at a lower part of the fish extraction container for collection of living fish

The extraction gate can be opened or closed by pivotally engaging with an extraction gate handle.

The extraction gate may comprise a damper which can separate the interior of the fish extraction container from the interior of a fish tank by sliding downwards. The damper may be moved by a drive or be moved manually.

The discharge point may be positioned at the bottom of the extraction container thereby enabling the fish extraction container to be emptied completely if the extraction gate is closed.

The fish extraction container may be in communication with the fish extraction arrangement such that the living fish collection efficiency is increased as the fish extraction arrangement will force the fish together and thus towards and through the fish extraction container.

The extraction plate may be moved up to the bottom of the extraction gate, thereby the enclosed compartment is at its minimum size.

The damper may comprise a damper bore at a top part of the damper such that when the extraction gate is closed, the extraction plate may be moved up to the bottom of the damper bore whereby the size of the enclosed compartment may be reduced even further.

The remaining live fish may then be manually swept into the enclosed compartment. The damper bore may afterwards be closed or blocked such that the fish extraction container can be emptied, thereby collecting the remaining fish.

The damper bore may be closed or blocked by plugins or a plate. The skilled person would know how to make the plugin or the plate such that no water will flow through the damper bore.

The extraction container may comprise flow means for creating a flow through the extraction gate and into the fish tank.

This will further cause the fish to move from the fish tank towards the extraction gate. Furthermore the amount of dead fish or sediment moving from the fish tank through the extraction gate is reduced as the water flow is in the opposite direction.

The fish tank may have at least two divider walls. By having at least two divider walls the farming plant can divide the fish tank into smaller adjustable compartments. The benefit of having these adjustable compartments is that the space needed per fish increases as a function of the size of the fish. Thus, it is possible to further optimise the plant according to the stages of growth, type etc. during the culturing of fish.

The fish farming plant may have a controller configured to move and position the respective outer end and inner end of one or more divider walls as a function of predetermined actions.

The effect of having a controller moving the divider walls as a function of predetermined actions is that the need for human interaction is reduced, which will lead to a cost reduction.

The method of extracting fish from a fish tank of a fish farming plant may as an example comprise the step of positioning an end of at least one divider wall in the vicinity of a side of an open extraction gate connecting the fish tank with an extraction container.

The step above will be followed by a step of lifting an extraction plate to the vicinity of the bottom of the extraction gate.

The step above will be followed by a step of creating a flow through the extraction gate and into the fish tank.

The step above will be followed by a step of closing the extraction gate.

The method of extracting fish from a fish tank of a fish farming plant may further comprise the step of sucking from at least one suction inlet.

An embodiment of a method of extracting fish from a fish tank of a fish farming plant may comprise acts of:
- An act of positioning may be performed by positioning an end of at least two divider walls in the vicinity of a side of an open extraction gate connecting the fish tank with an extraction container.

This will increase the fish density which may force fish to swim through the extraction gate into the extraction container from where the fish can be collected.
- An act of lifting may be performed by lifting an extraction plate to the vicinity of the bottom of the extraction gate.

This may further force fish to swim through the extraction gate and into the extraction container from where the fish can be collected.
- An act of closing the extraction gate may be performed such that the extraction container can be emptied completely for water and fish.

It can be time-consuming to have all the fish to swim through the extraction gate. Furthermore, the above-mentioned acts may cause the fish to panic or stress. The panicked or stressed fish may empty their bowels resulting in unclear water, such that it is hard to determine whether all fish has been collected.

The unclear water can be counteracted by further acts of sliding a damper into the extraction gate, said damper having a damper bore in part of the damper.

The damper blocks the bottom part of the extraction gate, such that an act of lifting the extraction plate to the vicinity of the bottom of the damper bore may be performed. Thereby, the depth to the extraction plate is decreased such that a person may visibly inspect the number of fish remaining in the fish tank.

This may be followed by an act of forcing fish through the damper bore into the extraction container. This may be done by a person sweeping the fish towards the extraction gate.

When there are no more living fish in the fish tank, then an act of closing the damper may be performed whereby the extraction gate is closed. This can be done by blocking the damper bore. The skilled person would know how to sufficiently block the damper bore.

Lastly, an act of emptying the extraction container may be performed, and the remaining fish will then be collected.

The fish farming plant has means adapted to execute the acts of the method of extracting fish from a fish tank of a fish farming plant.

A computer program may comprise instructions to cause the fish farming plant to execute the acts of the method of extracting fish from a fish tank of a fish farming plant.

A computer-readable medium may have stored thereon the computer program.

### Brief Description of Drawings

Embodiments of the invention will be described in the figures, whereon:
- Fig. 1: illustrates an outline of the fish farming plant;
- Fig. 2: illustrates an outline of an embodiment of the fish farming plant;
- Fig. 3: illustrates an outline of another embodiment of the fish farming plant;
- Fig. 4: illustrates an outline of another embodiment of the fish farming plant;
- Fig. 5: illustrates the fish suction arrangement;
- Fig. 6: illustrates a detailed side cut view of the fish farming plant;
- Fig. 7: illustrates the divider wall;
- Fig. 8: illustrates the engagement between a divider wall and an outer wall;
- Fig. 9: illustrates the engagement means of a divider wall from a side view;
- Fig. 10: illustrates an intermediate position of the fish extraction;
- Fig. 11: illustrates the end position of the fish extraction;
- Fig. 12: illustrates the extraction container attached to the outer wall;
- Fig. 13: illustrates the extraction container viewed from inside the fish tank;
- Fig. 14: illustrates the fish suction arrangement; and
- Fig. 15: illustrates a method of extracting fish from a fish tank.
- Fig. 16: illustrates an open extraction container comprising a damper;
- Fig. 17: illustrates a closed extraction container comprising a damper.

**Description of Drawings**

| **Item** | **No** |
|---|---|
| Fish farming plant | 100 |
| Central tank | 110 |
| Fish tank | 120 |
| Inner wall face | 130 |
| Inner wall | 132 |
| Outer wall face | 135 |
| Outer wall | 137 |
| Fish tank width | 140 |
| Inner wall engagement means | 150 |
| Outer wall engagement means | 155 |
| Bottom | 160 |
| Top | 165 |
| Water flow direction | 180 |
| Divider wall | 200 |
| Inner end | 230 |
| Outer end | 235 |
| Divider wall width | 240 |
| Inner divider engagement means | 250 |
| Outer divider engagement means | 255 |
| Fish suction arrangement | 260 |
| Suction inlet | 270 |
| Suction inlet gate | 275 |
| Suction inlet handle | 278 |
| Bottom end | 280 |
| Injectors | 290 |
| Fish extraction arrangement | 300 |
| Extraction plate | 310 |
| Extraction container | 320 |
| Extraction gate | 330 |
| Extraction gate handle | 335 |
| Flow means | 340 |
| Flow | 350 |
| Damper | 360 |
| Damper bore | 365 |
| Controller | 400 |
| Method of extracting fish from a fish tank | 500 |
| Positioning | 510 |
| Lifting | 520 |
| Creating | 530 |
| Closing | 540 |
| Sucking | 550 |

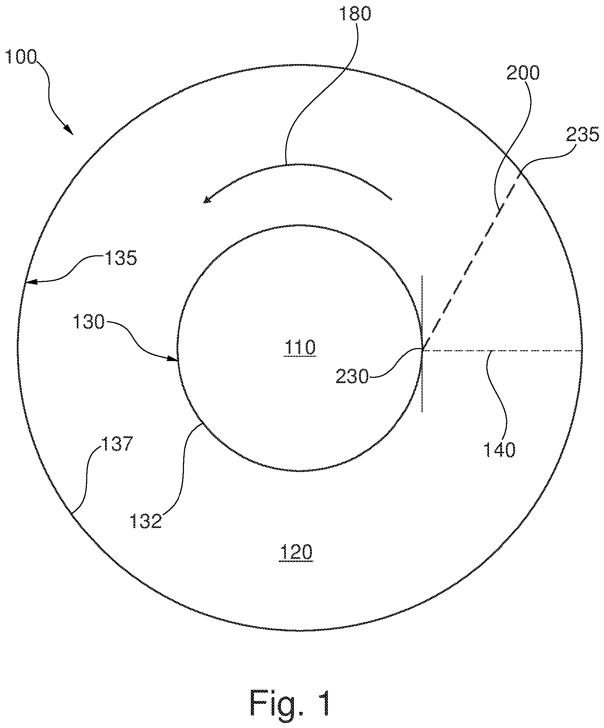

Figure 1 illustrates an outline of a circular fish farming plant 100 having a central tank 110, which is surrounded by a fish tank 120. The fish tank 120 has an inner wall 132 with an inner wall face 130 and an outer wall 137 with an outer wall face 135. The fish farming plant 100 has one fish tank width 140 due to the circular shape.

The fish tank 120 has one divider wall 200 with an inner end 230 at the inner wall 132 and an outer end 235 at the outer wall 137. Only a single divider wall 200 is disclosed in the figure, but the fish farming plant 100 may have more than one.

The water flow direction 180 is counter-clockwise.

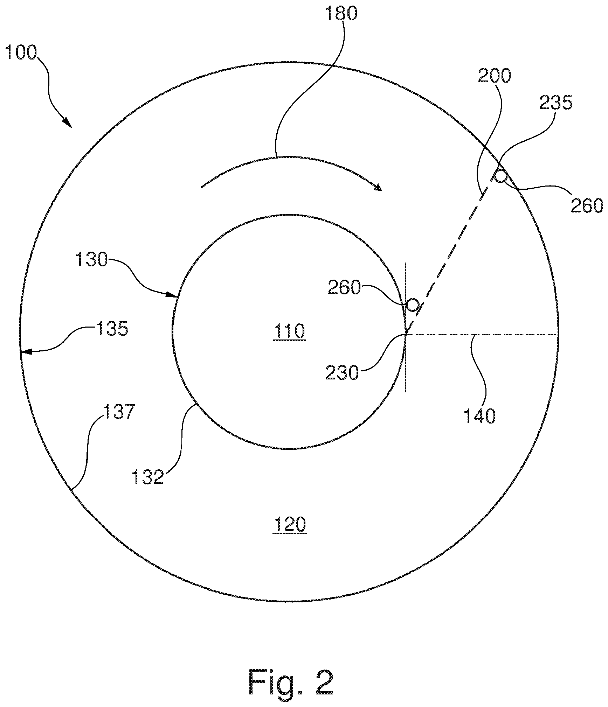

Figure 2 illustrates an outline of an embodiment of a circular fish farming plant 100 having a central tank 110, which is surrounded by one fish tank 120. The fish tank 120 has an inner wall 132 with an inner wall face 130 and an outer wall 137 with an outer wall face 135. The fish farming plant 100 has one fish tank width 140 due to the circular shape.

The fish tank 120 has one divider wall 200 with an inner end 230 at the inner wall 132 and an outer end 235 at the outer wall 137. Only a single divider wall 200 is disclosed in the figure, but the fish farming plant 100 may have more than one.

The water flow direction 180 is clockwise. The fish suction arrangement 260 is in this embodiment placed at the inner end 230 and outer end 235 of the divider wall 200.

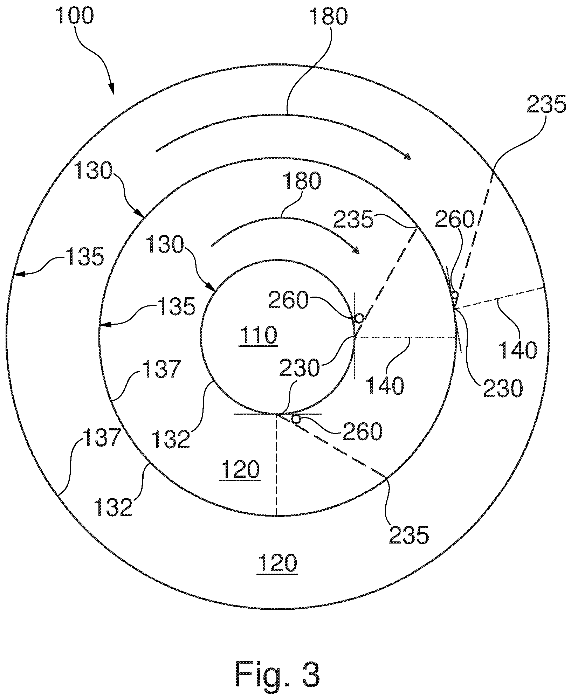

Figure 3 illustrates an outline of another embodiment of a fish farming plant 100 having a central tank 110, which is surrounded by two fish tanks 120 with different radi-uses. The innermost fish tank 120 has an inner wall 132 with an inner wall face 130 and an outer wall 137 with an outer wall face 135. The fish farming plant 100 has one innermost fish tank width 140 due to the circular shape.

The innermost fish tank 120 has one divider wall 200 with an inner end 230 at the inner wall 132 and an outer end 235 at the outer wall 137. The innermost fish tank 120 has two divider walls 200, but the innermost fish tank 120 may have any number of divider walls 200.

There is no substantial difference in the figure description between the innermost fish tank 120 in figure 3 and the fish tank 120 in figure 2.

Likewise, the outermost fish tank 120 in figure 3 operates exactly like the fish tank 120 in figure 2. The innermost tank 120 can from the outermost tanks 120 perspective be seen as a central tank 110.

A skilled person would recognise that adding more fish tanks 120 to the fish farming plant 100 would not change the general working principle of the invention.

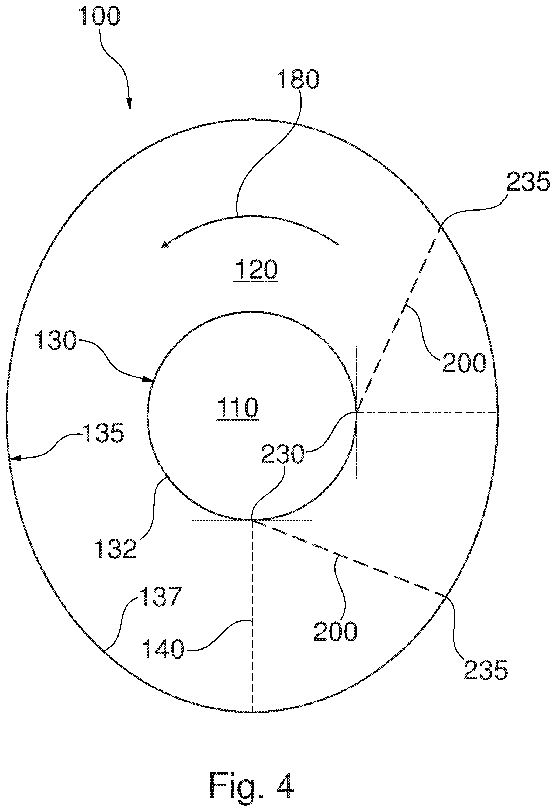

Figure 4 illustrates an outline of another embodiment of the fish farming plant 100 having a circular central tank 110 and a fish tank 120 with an inner wall 132 with an inner wall face 130 and an elliptic outer wall 137 with an outer wall face 135.

Due to the elliptic outer wall 137 the fish tank has a semi-minor axis and the semi-major axis along the two dotted lines.

The skilled person would know that the fish tank width 140 is the distance between the inner wall 132 and the outer wall 137 along the semi-major axis as the skilled person would understand that it is paramount that the divider wall 200 can move around the central tank 110.

The embodiment has two divider walls 200; each divider wall 200 has an inner end 230 near the inner wall 132 and an outer end 235 near the outer wall.

The central part 110 may also be an ellipse.

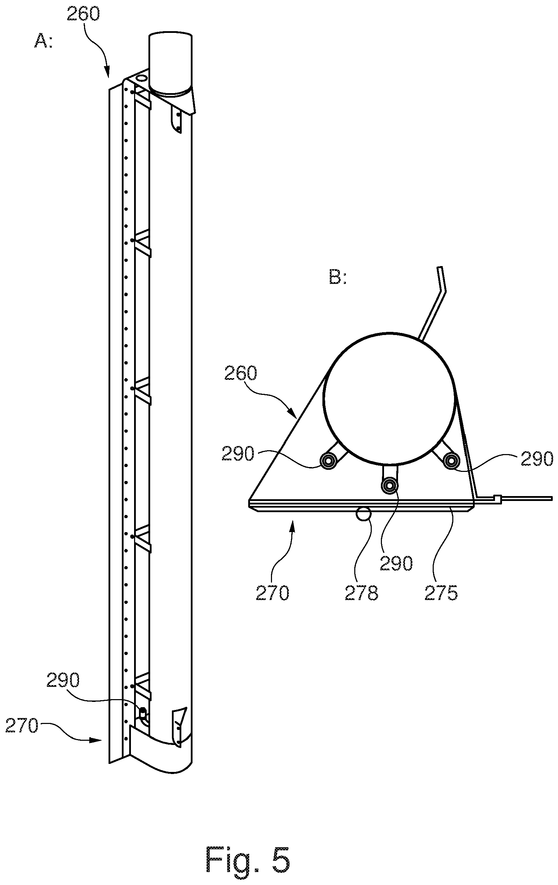

Figure 5A illustrates a back view of the fish suction arrangement 260 and Figure 5B illustrates a cross-sectional top view of the fish suction arrangement 260.

The fish suction arrangement 260 has a suction inlet handle 278 controlling the vertical position of a suction inlet gate 275. The fish suction arrangement 260 is closed when the suction inlet gate 275 is blocking the suction inlet 270.

Furthermore, the flow through the fish suction arrangement 260 is created and controlled by one or more injectors 290 or nozzles. The nozzles may be connected to an air pump or compressor so that the air will generate an upward lift and thus suction of water and dead fish.

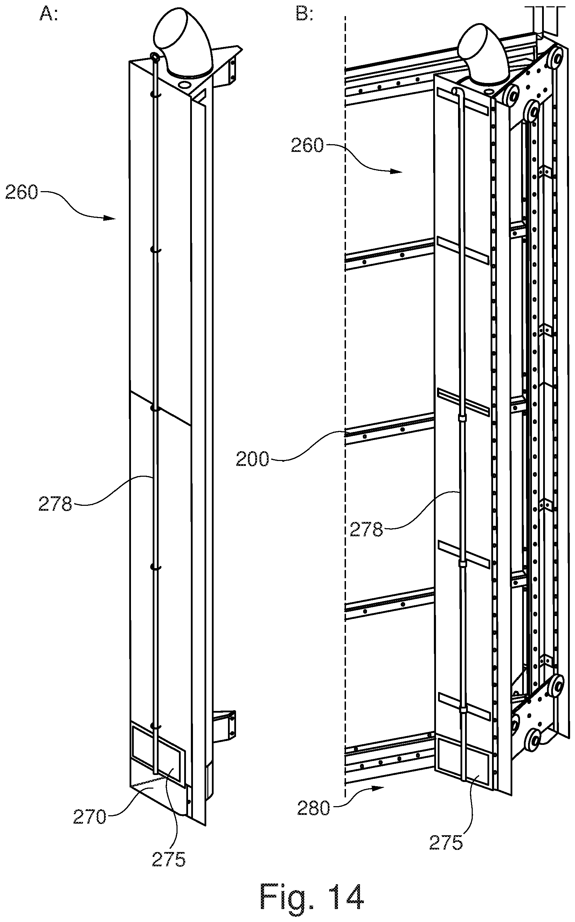

For further disclosure of the fish suction arrangement 260 see Fig. 14.

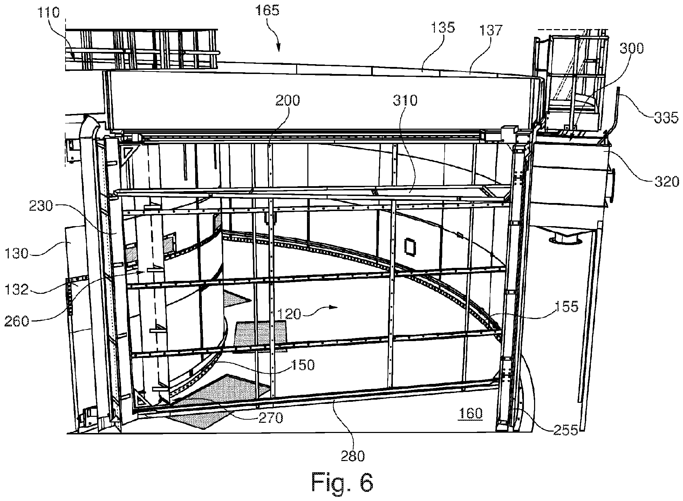

Figure 6 illustrates a detailed side cut view of the fish farming plant 100 in a fish extraction position.

The fish farming plant 100 has a central tank 110, which is surrounded by a fish tank 120 (partially shown). The fish tank 120 has an inner wall 130 with an inner wall face 132 and an outer wall 137 with an outer wall face 135. Furthermore, the fish tank has a bottom 160 and a top 165.

A divider wall 200 spans across the fish tank 120 from the inner wall 132 to the outer wall 137. The divider wall 200 has an inner end 230 with inner divider engagement means 250 (not shown) and an outer end 235 with outer divider engagement means 255 (partially shown) to engage with the inner wall engagement means 150 and outer wall engagement means 155, respectively.

At the bottom end 280 of the divider near the inner wall 132 the divider wall 200 has a fish suction arrangement 260 with a suction inlet 270 for sucking.

Figure 6 further discloses a fish extraction arrangement 300 having an extraction plate 310 in the fish tank 120 and an extraction container 320 attached to the outer wall 137 on the opposite side of the outer wall face 135. The communication between the extraction container 320 and the fish tank 120 is in this embodiment controlled by the extraction gate handle 335, which can open or close an extraction gate 330 (not shown).

In other embodiments the extraction gate 330 may be controlled by other means.

The extraction plate 310 is shown in a top position. But at the beginning of the fish extraction the extraction plate 310 will be at the bottom 160 from where it start moving towards the top 165 of the fish tank 120.

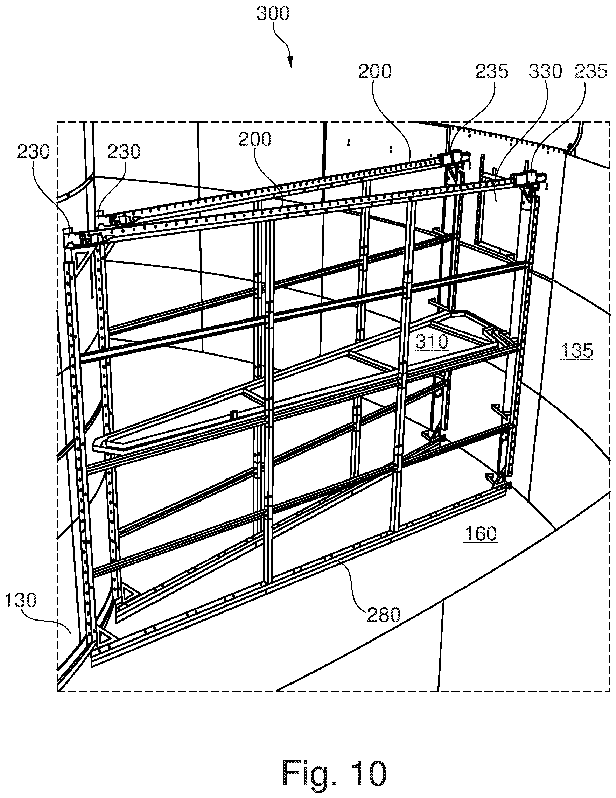

For the fish extraction arrangement 300 to work advantageously the fish tank 120 needs another divider wall 200 or a similar obstacle, which the fish cannot circumvent as it otherwise would be harder to guide the fish to move through the extraction gate 330. See figures 10-11.

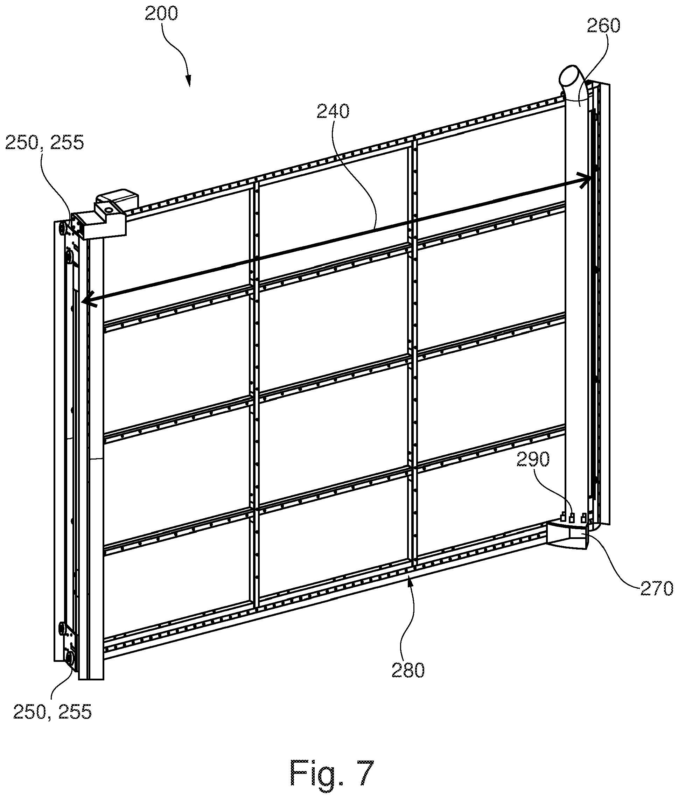

Figure 7 illustrates a divider wall 200 having a divider wall width 240 and a bottom end 280. The left side of the divider wall 200 is shown with inner or outer divider engagement means 250, 255 for engaging with a wall in a fish tank 120. The right side of the divider wall 200 also has engagement means, but the engagements means are not shown.

The embodiment has engagement means at the top and bottom of the divider wall 200, but the invention is not limited to this particular embodiment. The invention may have engagement means placed differently and it may have a different number of engagement means.

The right side of the divider wall 200 has a fish suction arrangement 260 with a suction inlet 270 placed at the bottom end 280 of the divider wall. The flow through the fish suction arrangement is provided by one or more injectors 290 or nozzles generating an airlift.

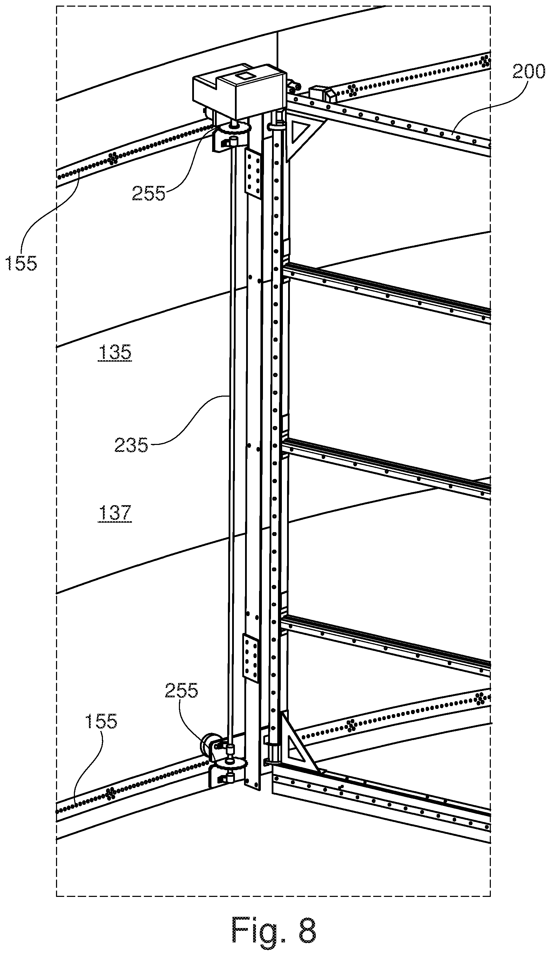

Figure 8 illustrates the engagement between a divider wall 200 and an outer wall 137. An engagement between a divider wall 200 and an inner wall 132 would be the same. The figure shows an outer end 235 of a divider wall 200 having outer divider engagement means 255 at the top and bottom of the divider wall 200 for engaging outer wall engagement means 155 on the outer wall face 135 of the outer wall 137.

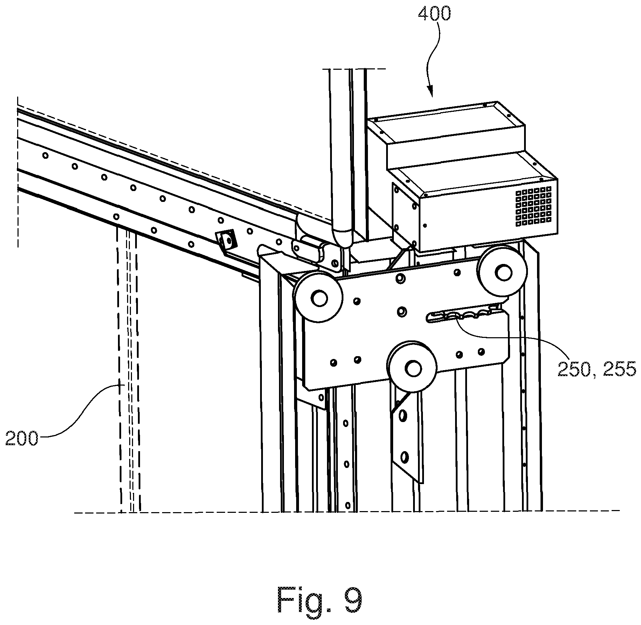

Figure 9 illustrates the inner or outer engagement means 250, 255 of a divider wall 200 from a side view. The inner and outer engagement means 250, 255 are rotary engaged with the inner or outer end 230, 235 of the divider wall 200. This allows the controller 400 to change the angle between the central tank 132 and the divider wall 200.

Furthermore, if the inner and outer engagement means 250, 255 were not rotary engaged with the divider wall, then it would put some serious constraints on the fish farming plant 100 as both the inner and outer walls 132, 137 have to be perfect circles.

Figure 10 illustrates an intermediate position of the fish extraction.

The divider walls 200 are positioned close together and they both engage with the extraction plate 310, which is halfway between the bottom 180 and the lower part of the extraction gate 330.

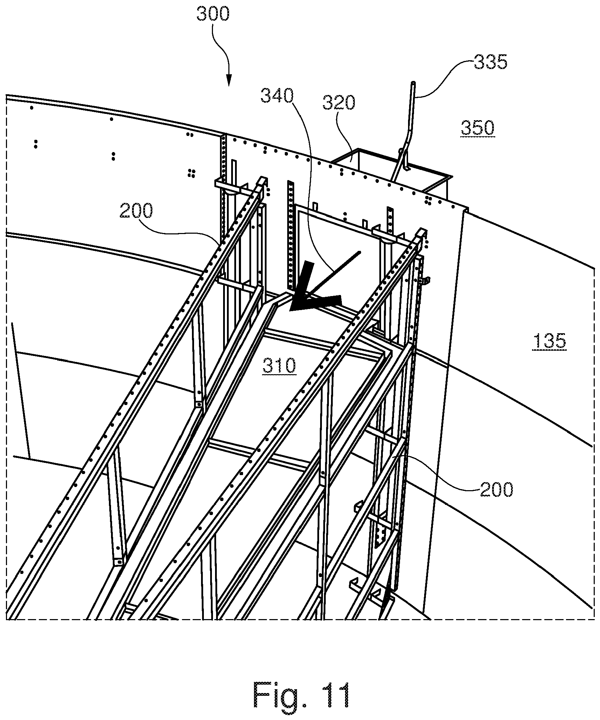

Figure 11 illustrates the end position of the fish extracting arrangement.

The divider walls 200 are positioned close together and they both engage with the extraction plate 310, which is positioned at the extraction gate 330. The extraction gate 330 is not shown in the figure because the extraction gate handle 335 has pivotally moved the extraction gate 330 upwards. The invention is not limited to how the extraction gate 330 is opened and closed.

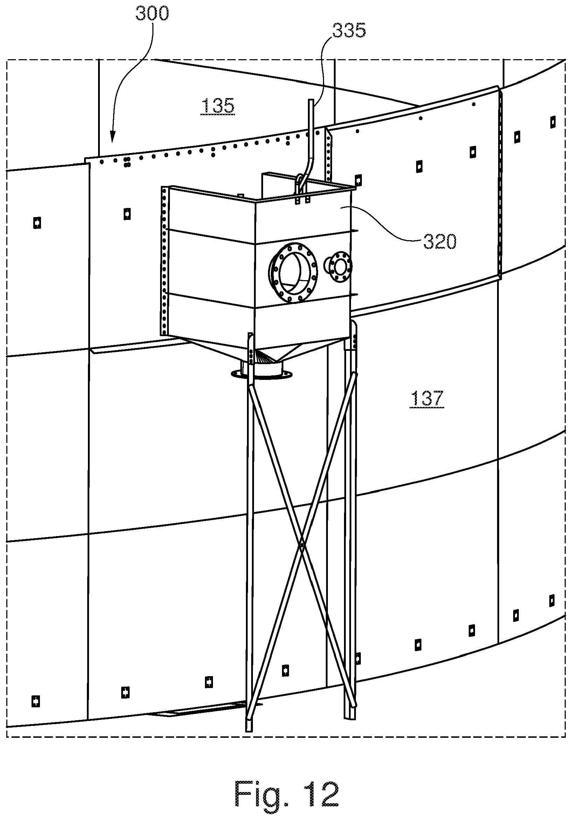

Figure 12 illustrates an embodiment of the extraction container 320 attached to the outer wall 137 of the fish tank 120.

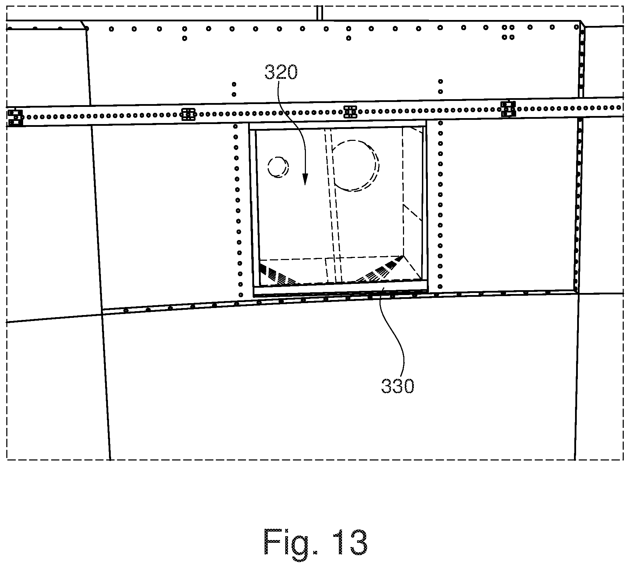

Figure 13 illustrates the extraction container 320 viewed from inside the fish tank 120. The extraction container 320 is positioned below an engagement means, and the extraction gate 330 is open.

Figure 14A illustrates the fish suction arrangement 260 alone and Figure 14B illustrates the fish suction arrangement 260 attached to a divider wall 200.

The fish suction arrangement 260 has a suction inlet handle 278 controlling the vertical position of a suction inlet gate 275. The fish suction arrangement 260 is closed, when the suction inlet gate 275 is blocking the suction inlet 270.

Furthermore, the flow through the fish suction arrangement 260 is created and controlled by the injectors 290 (not shown).

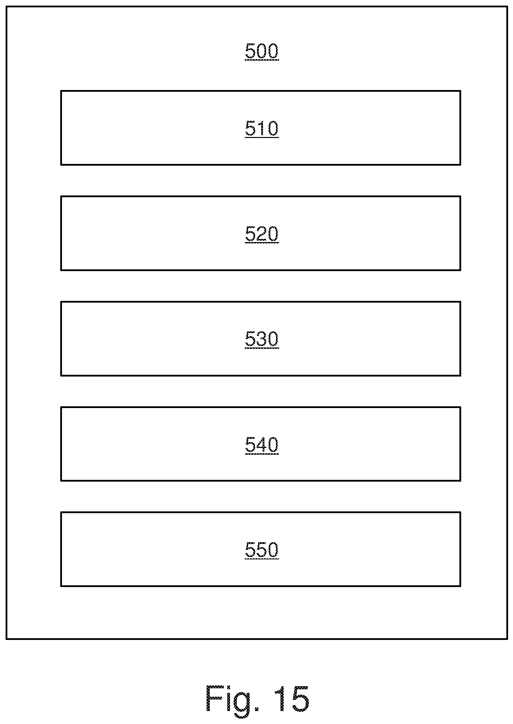

Figure 15 illustrates a method 500 of extracting fish from a fish tank 120 of a fish farming plant 100, the method 500 comprising acts of:
- The act of positioning 510 an end of at least one divider wall 200 in the vicinity of a side of an open extraction gate 330 connecting the fish tank 120 with an extraction container 320 (See Fig. 6).
- The act of lifting 520 the extraction plate 310 to the vicinity of the bottom of the extraction gate 330 (See Fig. 10).
- The act of creating 530 a flow 340 through the extraction gate 330 and into the fish tank 120.
- The act of closing 540 the extraction gate 330.
- The act of sucking 550 from at least one suction inlet 270.

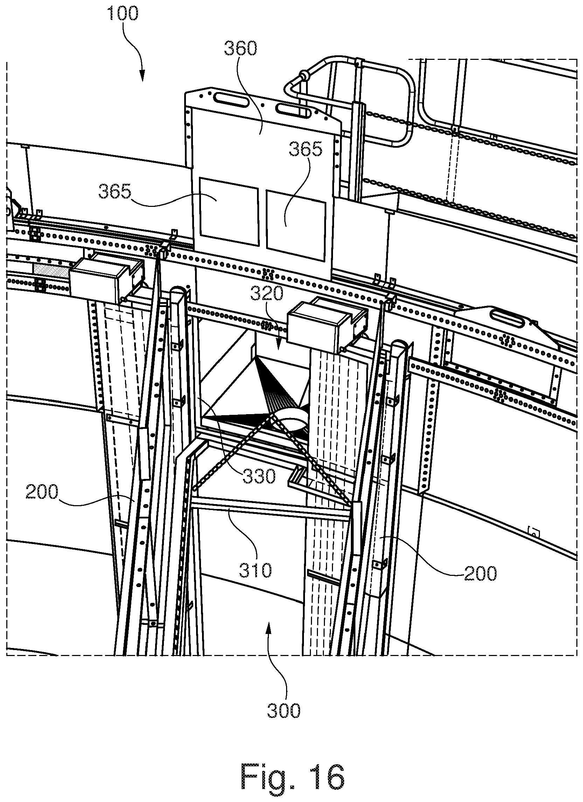

Fig. 16 illustrates an open extraction container 320 comprising an extraction gate 330 having a damper 360 with two damper bores 365.

The extraction gate 330 is open and thus the extraction container 320 is in communication with a fish extraction arrangement 300 comprising an extraction plate 310 between two divider walls 200.

The extraction plate 310 is positioned at the bottom of the open extraction gate 330, and living fish trapped in the fish extraction arrangement 300 may swim through the open extraction gate 330 into the extraction container 320.

The live fish may then be collected through a hole in the bottom of the extraction container 320.

In some cases not all fish swim through the extraction gate 320 by themselves. In such a case a person may manually push the fish through the extraction gate 320, however this can be cumbersome as the fish still have a lot of room.

Furthermore, typically the fish will stress resulting in them emptying their bowels. This will cause the water to become opaque, thereby making it difficult for the person to determine whether all living fish have been pushed through the extraction gate.

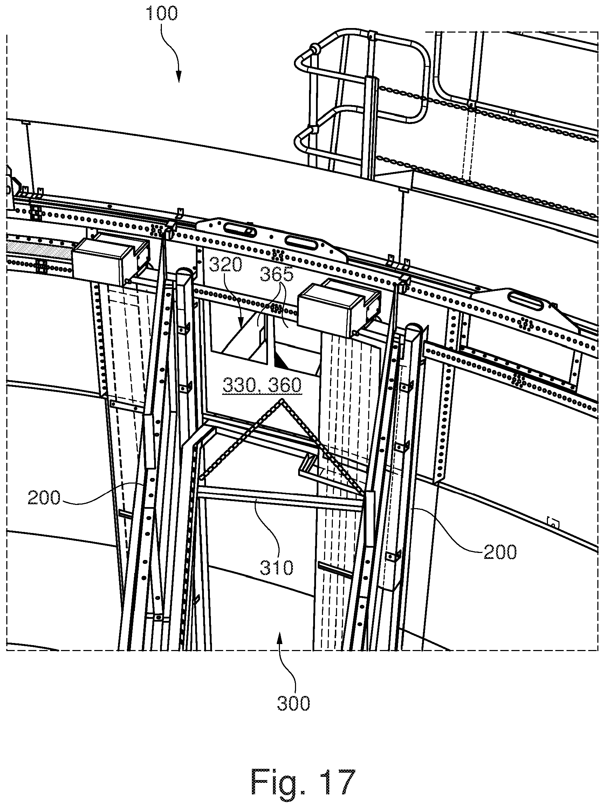

In this case, the extraction gate 320 can be closed by forcing the damper 360 downwards, see Fig. 17.

Fig. 17 illustrates a closed extraction container 320 comprising an extraction gate 330 having a damper 360 with two damper bores 365.

The extraction gate 330, and thus the extraction container 320, is still in communication with a fish extraction arrangement 300 comprising an extraction plate 310 between two divider walls 200 due to the two damper bores 365.

The extraction plate 310 may then be lifted using lifting means (not shown) to the bottom of the two damper bores 365.

The further lifting of the extraction plate 310 will limit the possible movement of the fish and make it easier to spot the fish as they cannot hide in the opaque water, such that a person may easily spot and push the living fish through one of the damper bores 365.

The damper bores 365 may afterwards be closed, such that the extraction container 320 can be emptied completely. Thereby the remaining fish is collected.

The damper bores 365 may be closed by plugins or a plate.

The fish extraction arrangements 300 shown in Figs. 10-13 may have a damper 360 as shown in Figs. 16-17 or a damper 360 with one or more damper bores.

The invention is defined by the features specified in the appended claims.

## Claims

1. Fish farming plant (100) with a central tank (110) that is at least partially surrounded by one or more fish tanks (120) where at least one of the one or more fish tanks (120) has an inner wall (132) with an inner wall face (130) and an outer wall (137) with an outer wall face (135), said fish tank (120) having a fish tank width (140) defined as the distance between the inner wall face (130) and the outer wall face (135) along an extent of the at least one fish tank (120); the fish farming plant (100) further comprising at least one divider wall (200) with a divider wall width (240) between an inner end (230) and an outer end (235) of the divider wall (200) and spanning between the inner wall face (130) and the outer wall face (135); **characterised in that** the divider wall width (240) is larger than the fish tank width (140).

2. Fish farming plant (100) according to claim 1, wherein
- the outer wall (137) has outer wall engagement means (155) for engaging with outer divider engagement means (255) for moving and/or positioning the outer end (235) of the divider wall (200) and
- the inner wall (132) has inner wall engagement means (150) for engaging with inner divider engagement means (250) for moving and/or positioning the inner end (230) of the divider wall (200).

3. Fish farming plant (100) according to claim 1 or 2, wherein the divider wall (200) comprises at least one fish suction arrangement (260) having a suction inlet (270) located at a bottom end (280) of the divider wall (200) and arranged towards the inner end (230) of the divider wall (200).

4. Fish farming plant (100) according to any previous claims, wherein the divider wall (200) forms an acute angle with the inner end (230) facing a flow in the fish tank.

5. Fish farming plant (100) according to any previous claims, wherein the central tank (110) is circular or elliptic and the outer wall (137) is elliptic.

6. Fish farming plant (100) according to any previous claims, wherein the fish farming plant (100) comprises at least two fish tanks (120).

7. Fish farming plant (100) according to any previous claims, wherein the fish tank (120) comprises at least two divider walls (200).

8. Fish farming plant (100) according to any previous claims, wherein the one or more divider walls (200) can turn 360 degrees plus around the fish tank (120).

9. Fish farming plant (100) according to any previous claims further comprising a fish extraction arrangement (300) with an extraction plate (310) configured to span the divider wall width (240) and configured to move from the bottom (160) of the fish tank (120) towards the top (165).

10. Fish farming plant (100) according to claim 9 further comprising a fish extraction container (320) comprises an extraction gate (330) in the outer (137) or inner wall (132) and the fish extraction container (320) being in communication with the fish extraction arrangement (300) in the fish tank (120) via the extraction gate (330) .

11. Fish farming plant (100) according to claim 10, wherein that the extraction plate (310) is adapted to form an enclosed compartment with at least two divider walls (200), wherein at least one of the divider walls (200) is movable, and that the fish extraction container (320) is positioned the outer (137) or inner wall (132) of the fish tank (120), that the fish extraction container (320) comprises a discharge point at a lower part of the fish extraction container (320) for collection of living fish and the extraction gate (330) comprises a damper (360) having a damper bore (365) in part of the damper (360).

12. A method of positioning a divider wall (200) of a fish tank (120) of a fish farming plant (100) according to one or more of the above claims 1 to 11, the method comprising acts of
- positioning (510) the respective outer end (230) and inner end (235) of one or more divider walls (200) as a function of predetermined actions.

13. The method of positioning a divider wall (200) according to claim 12, the method comprising acts of
- positioning (510) the respective outer end (230) and inner end (235) of at least two divider walls (200);
- dividing the fish tank (120) in adjustable compartments.

14. A method (500) of extracting fish from a fish tank (120) of a fish farming plant (100) according to one or more of the above claims 1 to 11, the method (500) comprising acts of:
- positioning (510) an end of at least two divider walls (200) in the vicinity of a side of an open extraction gate (330) connecting the fish tank (120) with an extraction container (320);
- lifting (520) an extraction plate (310) to the vicinity of the bottom of the extraction gate (330);
- closing (540) the extraction gate (330).

15. The method (500) according to claim 14 further comprising acts of:
- sliding a damper (360) into the extraction gate (330), said damper (360) having a damper bore (365) in part of the damper (360);
- lifting (520) the extraction plate (310) to the vicinity of the bottom of the damper bore (365).

## Patentansprüche

1. Fischzuchtanlage (100) mit einem zentralen Tank (110), der zumindest teilweise von einem oder mehreren Fischtanks (120) umgeben ist, wobei mindestens einer der einen oder mehreren Fischtanks (120) eine Innenwand (132) mit einer Innenwandfläche (130) und eine Außenwand (137) mit einer Außenwandfläche (135) hat, wobei der Fischtank (120) eine Fischtankbreite (140) aufweist, die als der Abstand zwischen der Innenwandfläche (130) und der Außenwandfläche (135) entlang einer Ausdehnung des mindestens einen Fischtanks (120) definiert ist; wobei die Fischzuchtanlage (100) ferner mindestens eine Trennwand (200) mit einer Trennwandbreite (240) zwischen einem inneren Ende (230) und einem äußeren Ende (235) der Trennwand (200) aufweist und sich zwischen der inneren Wandfläche (130) und der äußeren Wandfläche (135) erstreckt; **dadurch gekennzeichnet, dass** die Trennwandbreite (240) größer als die Fischtankbreite (140) ist.

2. Fischzuchtanlage (100) nach Anspruch 1, wobei
- die Außenwand (137) Außenwand-Eingriffsmittel (155) zum Eingriff mit Außenwand-Eingriffsmitteln (255) zum Bewegen und/oder Positionieren des äußeren Endes (235) der Trennwand (200) aufweist und
- die Innenwand (132) Innenwand-Eingriffsmittel (150) zum Eingriff mit Innenwand-Eingriffsmitteln (250) zum Bewegen und/oder Positionieren des inneren Endes (230) der Trennwand (200) aufweist.

3. Fischzuchtanlage (100) nach Anspruch 1 oder 2, wobei die Trennwand (200) mindestens eine Fischsaugvorrichtung (260) mit einem Saugeinlass (270) umfasst, der sich an einem unteren Ende (280) der Trennwand (200) befindet und in Richtung des inneren Endes (230) der Trennwand (200) angeordnet ist.

4. Fischzuchtanlage (100) gemäß einem der vorstehenden Ansprüche, wobei die Trennwand (200) einen spitzen Winkel mit dem inneren Ende (230) bildet, das einer Strömung im Fischtank zugewandt ist.

5. Fischzuchtanlage (100) gemäß einem der vorherigen Ansprüche, wobei der zentrale Tank (110) kreisförmig oder elliptisch ist und die Außenwand (137) elliptisch ist.

6. Fischzuchtanlage (100) gemäß einem der vorherigen Ansprüche, wobei die Fischzuchtanlage (100) mindestens zwei Fischtanks (120) umfasst.

7. Fischzuchtanlage (100) gemäß einem der vorherigen Ansprüche, wobei der Fischtank (120) mindestens zwei Trennwände (200) umfasst.

8. Fischzuchtanlage (100) gemäß einem der vorherigen Ansprüche, wobei die eine oder die mehreren Trennwände (200) um 360 Grad plus um den Fischtank (120) gedreht werden können.

9. Fischzuchtanlage (100) gemäß einem der vorstehenden Ansprüche, die ferner eine Fischentnahmeanordnung (300) mit einer Entnahmeplatte (310) umfasst, die so konfiguriert ist, dass sie die Trennwandbreite (240) überspannt und sich vom Boden (160) des Fischtanks (120) nach oben (165) bewegt.

10. Fischzuchtanlage (100) nach Anspruch 9, die ferner einen Fischentnahmebehälter (320) umfasst, der ein Entnahmetor (330) in der Außenwand (137) oder Innenwand (132) umfasst, wobei der Fischentnahmebehälter (320) über das Entnahmetor (330) mit der Fischentnahmeanordnung (300) im Fischtank (120) in Verbindung steht.

11. Fischzuchtanlage (100) nach Anspruch 10, wobei die Entnahmeplatte (310) so angepasst ist, dass sie mit mindestens zwei Trennwänden (200) ein geschlossenes Fach bildet, wobei mindestens eine der Trennwände (200) beweglich ist, und der Fischentnahmebehälter (320) an der Außen- (137) oder Innenwand (132) des Fischtanks (120) positioniert ist, dass der Fischentnahmebehälter (320) eine Abgabestelle an einem unteren Teil des Fischentnahmebehälters (320) zum Sammeln lebender Fische umfasst und das Entnahmetor (330) einen Dämpfer (360) mit einer Dämpferbohrung (365) in einem Teil des Dämpfers (360) umfasst.

12. Ein Verfahren zum Positionieren einer Trennwand (200) eines Fischtanks (120) einer Fischzuchtanlage (100) gemäß einem oder mehreren der vorstehenden Ansprüche 1 bis 11, wobei das Verfahren die folgenden Schritte umfasst
- Positionieren (510) des jeweiligen äußeren Endes (230) und inneren Endes (235) einer oder mehrerer Trennwände (200) als Funktion vorbestimmter Aktionen.

13. Das Verfahren zum Positionieren einer Trennwand (200) nach Anspruch 12, wobei das Verfahren die folgenden Schritte umfasst
- Positionieren (510) des jeweiligen äußeren Endes (230) und inneren Endes (235) von mindestens zwei Trennwänden (200);
- Unterteilen des Fischtanks (120) in verstellbare Abteile.

14. Ein Verfahren (500) zum Entnehmen von Fischen aus einem Fischtank (120) einer Fischzuchtanlage (100) gemäß einem oder mehreren der vorstehenden Ansprüche 1 bis 11, wobei das Verfahren (500) folgende Schritte umfasst:
- Positionieren (510) eines Endes von mindestens zwei Trennwänden (200) in der Nähe einer Seite eines offenen Entnahmetors (330), das den Fischtank (120) mit einem Entnahmebehälter (320) verbindet;
- Anheben (520) einer Entnahmeplatte (310) in die Nähe des Bodens des Entnahmetors (330);
- Schließen (540) des Entnahmetors (330).

15. Das Verfahren (500) gemäß Anspruch 14 umfasst ferner die folgenden Schritte:
- Einschieben eines Dämpfers (360) in das Entnahmetor (330), wobei der Dämpfer (360) eine Dämpferbohrung (365) in einem Teil des Dämpfers (360) aufweist;
- Anheben (520) der Entnahmeplatte (310) in die Nähe des Bodens der Dämpferbohrung (365).

## Revendications

1. Installation de pisciculture (100) avec un réservoir central (110) qui est au moins partiellement entouré par un ou plusieurs réservoirs à poissons (120), au moins l'un des réservoirs à poissons (120) a une paroi intérieure (132) avec une face de paroi intérieure (130) et une paroi extérieure (137) avec une face de paroi extérieure (135), ledit réservoir à poissons (120) ayant une largeur de réservoir à poissons (140) définie comme la distance entre la face de paroi intérieure (130) et la face de paroi extérieure (135) le long d'une étendue de l'au moins un réservoir à poissons (120) ; l'installation de pisciculture (100) comprenant en outre au moins une paroi de séparation (200) ayant une largeur de paroi de séparation (240) entre une extrémité intérieure (230) et une extrémité extérieure (235) de la paroi de séparation (200) et s'étendant entre la face de paroi intérieure (130) et la face de paroi extérieure (135) ; **caractérisée en ce que** la largeur de la paroi de séparation (240) est supérieure à la largeur du réservoir à poissons (140).

2. Installation de pisciculture (100) selon la revendication 1, dans laquelle
- la paroi extérieure (137) a des moyens d'engagement de paroi extérieure (155) destinés à venir en prise avec des moyens d'engagement de séparation extérieure (255) pour déplacer et/ou positionner l'extrémité extérieure (235) de la paroi de séparation (200) et
- la paroi intérieure (132) a des moyens d'engagement de paroi intérieure (150) destinés à venir en prise avec des moyens d'engagement de séparation intérieure (250) pour déplacer et/ou positionner l'extrémité intérieure (230) de la paroi de séparation (200).

3. Installation de pisciculture (100) selon la revendication 1 ou 2, dans laquelle la paroi de séparation (200) comprend au moins un dispositif d'aspiration de poisson (260) ayant une entrée d'aspiration (270) située à une extrémité inférieure (280) de la paroi de séparation (200) et agencée vers l'extrémité intérieure (230) de la paroi de séparation (200).

4. Installation de pisciculture (100) selon l'une quelconque des revendications précédentes, dans laquelle la paroi de séparation (200) forme un angle aigu avec l'extrémité intérieure (230) faisant face à un écoulement dans le réservoir à poissons.

5. Installation de pisciculture (100) selon l'une quelconque des revendications précédentes, dans laquelle le réservoir central (110) est circulaire ou elliptique et la paroi extérieure (137) est elliptique.

6. Installation de pisciculture (100) selon l'une quelconque des revendications précédentes, dans laquelle l'installation de pisciculture (100) comprend au moins deux réservoirs à poissons (120).

7. Installation de pisciculture (100) selon l'une quelconque des revendications précédentes, dans laquelle le réservoir à poissons (120) comprend au moins deux parois de séparation (200).

8. Installation de pisciculture (100) selon l'une quelconque des revendications précédentes, dans laquelle l'une ou les plusieurs parois de séparation (200) peuvent tourner à 360 degrés ou plus autour du réservoir à poissons (120).

9. Installation de pisciculture (100) selon l'une quelconque des revendications précédentes, comprenant en outre un agencement d'extraction de poisson (300) avec une plaque d'extraction (310) configurée pour couvrir la largeur de la paroi de séparation (240) et configurée pour se déplacer du bas (160) du réservoir à poissons (120) vers le haut (165).

10. Installation de pisciculture (100) selon la revendication 9 comprenant en outre un récipient d'extraction de poisson (320) comprenant une porte d'extraction (330) dans la paroi extérieure (137) ou intérieure (132) et le récipient d'extraction de poisson (320) étant en communication avec l'agencement d'extraction de poisson (300) dans le réservoir à poissons (120) via la porte d'extraction (330).

11. Installation de pisciculture (100) selon la revendication 10, dans laquelle la plaque d'extraction (310) est conçue pour former un compartiment fermé avec au moins deux parois de séparation (200), dans laquelle au moins l'une des parois de séparation (200) est mobile, et en ce que le récipient d'extraction de poisson (320) est positionné sur la paroi extérieure (137) ou intérieure (132) du réservoir à poissons (120), en ce que le récipient d'extraction de poisson (320) comprend un point de décharge au niveau d'une partie inférieure du récipient d'extraction de poisson (320) pour la collecte de poissons vivants et la porte d'extraction (330) comprend un amortisseur (360) ayant un alésage d'amortisseur (365) dans une partie de l'amortisseur (360).

12. Procédé de positionnement d'une paroi de séparation (200) d'un réservoir à poissons (120) d'une installation de pisciculture (100) selon l'une ou plusieurs des revendications 1 à 11 ci-dessus, le procédé comprenant des actions de
- positionnement (510) de l'extrémité extérieure (230) et de l'extrémité intérieure (235) respectives d'une ou de plusieurs parois de séparation (200) en fonction d'actions prédéterminées.

13. Procédé de positionnement d'une paroi de séparation (200) selon la revendication 12, le procédé comprenant des actions de
- positionnement (510) de l'extrémité extérieure (230) et de l'extrémité intérieure (235) respectives d'au moins deux parois de séparation (200) ;
- division du réservoir à poissons (120) en compartiments réglables.

14. Procédé (500) d'extraction de poissons à partir d'un réservoir à poissons (120) d'une installation de pisciculture (100) selon une ou plusieurs des revendications 1 à 11 ci-dessus, le procédé (500) comprenant des actions de :
- positionnement (510) d'une extrémité d'au moins deux parois de séparation (200) à proximité d'un côté d'une porte d'extraction ouverte (330) reliant le réservoir à poissons (120) à un récipient d'extraction (320) ;
- soulèvement (520) d'une plaque d'extraction (310) jusqu'à proximité du fond de la porte d'extraction (330) ;
- fermeture (540) de la porte d'extraction (330).

15. Procédé (500) selon la revendication 14 comprenant en outre les actions de :
- glissement d'un amortisseur (360) dans la porte d'extraction (330), ledit amortisseur (360) ayant un alésage d'amortisseur (365) dans une partie de l'amortisseur (360) ;
- soulèvement (520) de la plaque d'extraction (310) jusqu'à proximité du fond de l'alésage d'amortisseur (365) .
